# EUROPEAN PATENT APPLICATION

(11) **EP 2 511 354 A1**
(43) Date of publication of application: **17.10.2012**
(21) Application number: 11162437.5
(22) Date of filing: 14.04.2011
(51) Int. Cl.: C09D 167/00, C09D 167/02, C09J 167/00, C09J 167/02, C08J 7/04, C09J 5/06

(54) **Laminate comprising carrier and coating layer**

(71) Applicant: Universiteit van Amsterdam, 1012 WX Amsterdam (NL)
(72) Inventor: Alberts, Albert Henderikus, 1013 NG, Amsterdam (NL); Rothenberg, Gad, 2341 NV, Oegstgeest (NL)
(74) Representative: De Vries & Metman

(57) **Abstract**

Laminate comprising a carrier and a coating layer, wherein the coating layer is applied over at least part of the carrier, the coating layer comprising a polyester derived from an aliphatic polyalcohol with 2-15 carbon atoms and a polyacid, the coating layer having a thickness in the range of 10-4000 microns. Optionally a second carrier may be applied over at least part of the coating layer. If so desired, a further coating layer is applied over at least part of the second carrier, with optional further carrier-coating stacks applied over the further carrier.

preferably the polyacohol is secelected from one or more of glycerol, sorbitol, xylitol, and mannitol, in particular glycerol. The polyacid preferably is an aliphatic diacid or triacid with 3-15 carbon atoms. Examples of suitable acids include citric acid, succinic acid, and itaconic acid.

The laminate according to the invention may be, e.g., a multiplex-type material.

## Description

The present invention pertains to a laminate comprising a carrier and a coating layer. The invention also pertains to a laminate wherein a second carrier is applied over at least part of the coating layer, that is, a laminate wherein the coating layer acts as adhesive to adhere the carriers together.

Coatings and adhesives are used in numerous applications, to coat numerous types of materials, and to adhere numerous types of materials together. Depending on the type, various problems are associated with conventional coatings and adhesives.
A first problem is that it is difficult to obtain adhesives which are able to adhere different types of carriers to each other. Glass and metal are particularly difficult to glue.
A second problem, which is of particular relevancy in the manufacture of materials with a relatively short life cycle, is that numerous adhesives are based on polymers containing aromatic rings or heteroatoms, particularly nitrogen or sulphur. As a consequence, when these materials are disposed, they cannot be disposed of as organic waste, and when burned they may cause the release of undesirable components. Additionally, coatings and adhesives need to meet the usual requirements for these types of materials, such as good adhesive properties, easy application, good curing properties, durability, scratch resistance, chemical resistance, stable layer thickness, etc.

The present invention provides a solution to these problems. More in particular, the present invention pertains to a laminate which good properties, which is characterized by the use of a specific polymer. Further characterizing features and embodiments of the present invention will become apparent from the further description of the invention.

The present invention pertains to a laminate comprising a carrier and a coating layer, wherein the coating layer is applied over at least part of the carrier, the coating layer comprising a polyester derived from an aliphatic polyalcohol with 2-15 carbon atoms and a polyacid, the coating layer having a thickness in the range of 10-4000 microns.

It has been found that the selection of the specific type of polymer allows the manufacture of laminates which, depending on their other components, show a clear burning profile and can be disposed as organic waste. Further, the coating layer-is stable and sturdy.
A particular feature of the coating layer is that it shows scratch-resistant properties. More specifically, depending on its exact composition it may show self-healing properties.
A further particular feature of the laminate is that concrete and other aqueous compositions do not adhere to it. This makes it particularly suitable for use in molds in the processing of concrete.
Further, it has been found that, in contrast with many conventional coating compositions, the polymer shows good adherence to glass. Therefore the polymer is particularly suitable for the manufacture of laminates involving one or more ceramic (including glass) carriers.
Further, it has been found that the coating layer shows good chemical resistance, e.g. to acetone and other polar solvents.
A further feature of the present invention is that the polymer has been found to show good fire-retardant properties. Accordingly, laminates of the present invention are particularly suitable for use in applications where fire retardancy is an issue.

### The polyester and its manufacture

The polyester used in the present invention is a polyester derived from an aliphatic polyalcohol with 2-15 carbon atoms and a polyacid.

The polyalcohol used in the present invention does not contain aromatic structures or N or S heteroatoms. More in particular the polyalcohol is an aliphatic polyalkanol containing only C, H, and O atoms. The polyalcohol used in the present invention comprises at least two hydroxyl groups, in particular at least thee hydroxyl groups. In general, the number of hydroxyl groups will be 10 or less, more in particular 8 or less, or even 6 or less.
The polyalcohol has 2-15 carbon atoms. More in particular, the polyalcohol has 3-10 carbon atoms.
It is preferred for the polyalcohol to contain no other non-carbon groups than hydroxyl groups. It is preferred for the alcohol to contain no heteroatoms, including oxygen, in its backbone.
In a preferred embodiment of the present invention the polyalcohol contains a relatively large number of hydroxyl groups in comparison with its number of carbon atoms. For example, the ratio between the number of hydroxyl groups and the number of carbon atoms ranges from 1:4 (i.e. one hydroxyl group per four carbon atoms, or 8 carbon atoms for a dialcohol) to 1:0.5 (i.e. 2 hydroxyl groups per carbon atom). In particular, the ratio between the number of hydroxyl groups and the number of carbon atoms ranges from 1:3 to 1:0.75, more specifically, from 1:2 to 1:0.75. A group of specifically preferred polyalcohols is the group wherein the ratio ranges from 1:1.5 to 1:0.75. Compounds wherein the ratio of hydroxyl groups to carbon atoms is 1:1 are considered especially preferred.
Examples of suitable polyalcohols include glycerol, sorbitol, xylitol, and mannitol, and, from the group of dialcohols 1,2-propane diol, 1,3-propane diol, and 1,2-ethane diol. The use of compounds selected from the group of glycerol, sorbitol, xylitol, and mannitol, is preferred, with the use of glycerol being particularly preferred.

The preference for glycerol is based on the following: In the first place glycerol has a melting point of 20°C, which allows easy processing, in particular as compared to xylitol, sorbitol, and mannitol, which all have melting points well above 90°C. Further, it has been found that glycerol gives coatings of high quality, and thus combines the use of an easily accessible source material with good processing conditions and a high-quality product.

Mixtures of different types of alcohol may also be used.
It is preferred, however, for the alcohol to consist for at least 50 mole% of glycerol, xylitol, sorbitol, or mannitol, in particular of glycerol, preferably at least 70 mole%, more in particular at least 90 mole%, or even at least 95 mole%. In one embodiment the alcohol consists essentially of glycerol.

The use of glycerol which is a side product of the manufacture of biodiesel by the transesterification reaction of glycerides with mono-alcohols is a specific embodiment of the present invention. Suitable monoalcohols include C1-C10 monoalcohols, in particular C1-C5 monoalcohols, more in particular C1-C3 monoalcohols, specifically methanol. The glycerides are mono-di- and esters of glycerol and fatty acids, the fatty acids generally having 10-18 carbon atoms. Suitable processes for manufacturing biodiesel with associated glycerol are known in the art.

The polyacid does not contain aromatic structures or N or S heteroatoms. More in particular the polyacid is an aliphatic polycarboxylic acid containing only C, H, and O atoms. It is preferred for the polyacid to contain no other functional groups than carboxylic acid groups. It is preferred for the acid to contain no heteroatoms, including oxygen, in its backbone.
In one embodiment the polyacid used in the present invention is selected from dicarboxylic acids, tricarboxylic acids, and mixtures thereof.
In one embodiment the acid contains at least 10 wt.% of tricarboxylic acid, calculated on the total amount of acid, preferably at least 30 wt.%, more preferably at least 50 wt.%. In one embodiment the amount of tricarboxylic acid is at least 70 wt.%, more in particular at least 90 wt.%, or even at least 95 wt.%. In one embodiment the acid consists essentially of tricarboxylic acid, wherein the word essentially means that other acids may be present in amounts that do not affect the properties of the material.
In one embodiment the acid comprises at least 10 wt.% of dicarboxylic acid, calculated on the total amount of acid, preferably at least 30 wt.%, more preferably at least 50 wt.%. In one embodiment the amount of dicarboxylic acid is at least 70 wt.%, more in particular at least 90 wt.%, or even at least 95 wt.%. In one embodiment the acid consists essentially of dicarboxylic acid, wherein the word essentially means that other acids may be present in amounts that do not affect the properties of the material.
In one embodiment the acid comprises a combination of at least 2 wt.% of tricarboxylic acid and at least 2 wt.% of dicarboxylic acid, more in particular at least 5 wt.% of tricarboxylic acid and at least 5 wt.% of dicarboxylic acid, or at least 10 wt.% of tricarboxylic acid and at least 10 wt.% of dicarboxylic acid. In this embodiment the weight ratio between the two types of acid may vary within wide ranges, depending on the properties of the desired material. In one embodiment, the dicarboxylic acid makes up between 2 and 98 wt.% of the total of dicarboxylic and tricarboxylic acid, in particular between 5 and 95 wt.%, more in particular between 10 and 90 wt.%, depending on the properties of the desired material.

The dicarboxylic acid may be any dicarboxylic acid which has two carboxylic acid groups and, in general, at most 15 carbon atoms. Examples of suitable dicarboxylic acids include itaconic acid, malic acid, succinic acid, glutaric acid, adipic acid and sebacic acid. Itaconic acid and succinic acid may be preferred.
The tricarboxylic acid may be any tricarboxylic acid which has three carboxylic acid groups and, in general, at most 15 carbon atoms. Examples include citric acid, isocitric acid, aconitic acid (both cis and trans), and 3-carboxy-cis,cis-muconic acid. The use of citric acid is considered preferable, both for reasons of costs and of availability. The citric acid can be provided in anhydrous form. However, as the presence of water is not detrimental to the process, it is possible, and preferred to use citric acid monohydrate as starting material.
In one embodiment the acid contains at least 50 mol% of citric acid, preferably at least 70 mole%, more in particular at least 90 mole%, or even at least 95 mole%. In one embodiment the acid consists essentially of citric acid. In one embodiment, the polymer is a glycerol-tricarboxylic acid polyester, in particular a glycerol citric acid polyester, with a carbon content of at most 43.00 wt.% and a hydrogen content of at most 5.40 wt.%.

In another embodiment the acid contains at least 50 mol% of succinic acid, preferably at least 70 mole%, more in particular at least 90 mole%, or even at least 95 mole%. In one embodiment the acid consists essentially of succinic acid. It has appeared that the use of succinic acid may result in a composition with good water-resistance.
In another embodiment the acid contains at least 50 mol% of itaconic acid, preferably at least 70 mole%, more in particular at least 90 mole%, or even at least 95 mole%. In one embodiment the acid consists essentially of itaconic acid. It has appeared that the use of itaconic acid may result in a composition with good water-resistance.

The molar ratio between the polyalcohol and the polyacid will be governed by the ratio between the number of reacting groups in the alcohol(s) and acid(s) used.
In general, the ratio between the number of OH groups and the number of acid groups is between 5:1 and 1:5.
Where the coating layer will be covered with a further coating layer, that is, where the coating is an adhesive, the ratio between OH groups and acid groups acid may in one embodiment be between 5:1 and 1:2, in particular between 5:1 and 1:1. It appears that the use of an excess of OH groups, in particular glycerol, may be advantageous in this application.
Where the polymer layers is the outer layer, it may be preferred for the ratio between hydroxyl groups and acid groups to be between 5: 1 sand 1:5. In one embodiment, preferably between 1.2:1 and 1:1.2, more preferably between 1.1:1 and 1:1.1. The theoretical molar ratio is 1:1, and no benefit is expected from deviating therefrom.

The polyester may be manufactured as follows. In a first step, the alcohol and the acid are combined to form a liquid phase. Depending on the nature of the compounds this can be done, e.g., by heating the mixture to a temperature where the acid will dissolve in the alcohol, in particular in glycerol. Depending on the nature of the acid this may be, e.g., at a temperature in the range of 20-200°C, e.g., 40-200°C, e.g. 60-200°C, or 90-200°C. If so desired, a solvent may be present in the reaction mixture during the manufacture of the polymer, e.g., to result in a less viscous reaction medium and/or to improve the solubility of the components. Solvent may be present, for example, in an amount of 5-50 wt.%, calculated on the total of polymer and solvent, in particular in an amount of 5-20 wt.%. Although other polar solvents can also be used, the use of water is preferred for environmental and cost reasons.

The mixture of alcohol and acid is subjected to a polymerization step. The polymerization may be carried out at a temperature in the range of 20 to 200°C, preferably in the range of 40 to 150°C, more in particular 40-130°C. The reaction may be carried out at atmospheric pressure, but if so desired also at higher or lower pressures.
If the mixture comprises a combination of acid and alcohol without solvent, it may be desired to keep the reaction temperature at a value which is sufficiently high to keep the mixture the liquid phase. The temperature may be above 40°C, in particular above 60°C, more in particular above 80°C. In some embodiments the temperature may be above 100°C, e.g., in the range of 100-200°C, in particular 100-150°C, more in particular 100-130°C.
Where a solvent is present, the reaction temperature may be lower, e.g., in the range of 20°C or higher, more in particular in the range of 40°C or higher, e.g., at a temperature of 40-100°C, in particular 50-100°C, because the solvent will help to dissolve the acid in the alcohol.

The reaction time is selected such that a polymer is obtained with a viscosity appropriate for applying onto a carrier in the form of a coating composition, whether or not in combination with additional components, as will be discussed in more detail below. The reaction time may, e.g., be of the order of 5 minutes to 12 hours, more in particular 5 minutes to 6 hours.

In one embodiment the polymerization step may be carried out for at least part of the time above the boiling point of water, that is, above the point where the vapor pressure of the liquid equals the environmental pressure surrounding the liquid. When the reaction is carried out at atmospheric pressure it is therefore preferred for the reaction to be carried out at a temperature above 100°C, more in particular at 105°C or higher. In one embodiment the polymer is kept at a temperature of between 100°C and 200°C, in particular 100-150°C, more in particular 100-130°C, for at least part of the period from the start of the reaction until the desired conversion is obtained. When the reaction is carried at reduced pressure within this embodiment, the reaction may be carried out at lower temperatures, e.g., a temperature of between 80°C and 100°C at a pressure of, say, 0.10-0.8 mbar.

It is preferred for the polyester to have a degree of polymerization at the point of combining it with the carrier in the range of 20 to 98 wt.%, in particular in the range of 40 to 98 wt.%, or in the range of 20-50 wt.%. The degree of polymerization will depend on the desired viscosity and on the further polymerization steps. It will also depend on the temperature at which the polymer is combined with the carrier.

If so desired, a polymerization catalyst may be added to the reaction mixture. Suitable catalysts for polyester manufacture are known in the art. They include, e.g., p-toluene sulphonic ester and tin oxalate, and sulphuric acid. It is within the scope of the skilled person to select a suitable catalyst.
It has been found, however, that the use of a catalyst is generally not required.

### The coating composition

As will be discussed in more detail below, the coating layer is obtained by applying a coating composition onto a carrier. The most important component of the coating layer of the laminate of the present invention is the polyester reaction product of alcohol and polyacid.
Other components may be present in the coating composition to provide specific properties. Examples of other components include catalysts, colorants, fillers, and additional polymers. In one embodiment less than 50 wt.% of the coating layer is made up of other components, preferably less than 30 wt.%, more preferably less than 20 wt.%, more preferably less than 10 wt.%. In some embodiments it may be preferred for the mixture to contain less than 5 wt.% of additional components, or even less than 2 wt.%_{.} The above pertains to components which end up in the final product. For example, water or other solvents which are evaporated from the final product, if any, are not included herein.

If so desired, the coating composition according to the invention may encompass additional polymers. It is preferred for these polymers to be degradable and/or based on biomaterials. Examples of suitable polymers include polymers derived from lactic acid, glycolic acid, cellulose, and bioethanol.

It is preferred for the coating composition used in the laminate according to the invention to be free of epoxyresins and other resins containing aromatic structures and N- and S-heteroatoms. In one embodiment, the coating composition contains less than 5 wt.% of epoxyresin, in particular less than 2 wt.% of epoxyresin.
In one embodiment of the present invention, the polyester of alcohol and polyacid makes up at least 50 wt.% of the total of polymer present in the coating composition, in particular at least 70 wt.%, more in particular at least 80 wt.%, still more in particular at least 90 wt.%. In one embodiment, the coating composition does not contain other polymers than the polyester of alcohol and polyacid.
The coating composition may contain additional components, in particular components which have no impact on the environment and/or do not interfere with the disposal properties of the composite material. Examples include inert fillers like ash, carbon, silica (sand), titania, and other inert materials.

The coating composition may contain other components known in the art, e.g., stabilizers. It is within the scope of the skilled person to select further components if so required.

In one embodiment, the coating composition or the laminate according to the invention do not comprise any material that would make it unsuitable for disposal by burning by land-filling, or as organic waste.

The coating composition comprising the polyester of the present invention will be liquid under application conditions, and will be subjected to a further curing or hardening step. The viscosity of the coating composition at the point of combining it with the carrier has to be such that the coating composition can be applied easily in the required thickness. It is within the scope of the skilled person to determine a suitable viscosity, taking the nature and amount of polymer, the nature and amount of solvent, if any, and the nature and amount of further components into account.

The coating composition may be manufactured by combining the polymer with any other components, and mixing the components together in a manner known in the art. Solvents, in particular water, may be added if so required.

### The laminate

The laminate according to the invention comprises a carrier and a coating layer, wherein the coating layer is applied over at least part of the carrier.

In one embodiment, the coating layer is present on the outer surface of the laminate. In this embodiment, the coating layer has a thickness in the range of 10-4000 microns, in particular in the range of 100 to 4000 microns, more in particular in the range of 1000-3000 microns. It may serve to improve the appearance of the surface, to protect it from outside influences, e.g., from scratching, to create a repelling layer, e.g., a water-repelling layer, and/or to provide additional properties.
Examples of embodiments where the coating layer is present on the outer surface of the laminate include, e.g., the use in molds in the processing of concrete.

In one embodiment of the present invention, a second carrier is applied over at least part of the coating layer. In this embodiment the coating layer is in effect used as an adhesive. It has been found that the composition used in the present invention is suitable for adhering various types of carriers to each other. Accordingly, the carriers used may be the same or different.

In one embodiment the - or at least one of the -carriers in the laminate comprises a ceramic material, wherein ceramic includes glass.
In one embodiment the - or at least one of the - carriers in the laminate comprises metal, e.g., a metal sheet.
In one embodiment the - or at least one of the - carriers in the laminate comprises wood or a wood-based material.

In one embodiment the laminate comprises a stack of carriers with coating layers sandwiched between the carriers, and/or applied on one or more outer surfaces of the laminate.
In this embodiment the laminate may, e.g., by a stack of wood or wood-based carriers with intermediate coating layers. For example, the laminate may be a multiplex-type material comprising 2-20 wood-based carrier layers, for example 2-5 wood-based carrier layers, with a thickness of, e.g., 0.2-5 mm, in particular 0.5-3 mm.
The coating layers sandwiched between the wood-based layers have a thickness of 10-2000 microns, more in particular in the range of 10-500 microns.
Coating layers may or may not be applied on one or more outer surfaces of the laminate. In one embodiment, coating layers are applied to the outer surfaces of the laminates. The coating layers on the outside of the laminate have a thickness of, for example, 100-200 microns, in particular 500-2000 microns.
This embodiment of the present invention provides an alternative for, e.g., triplex and multiplex materials known in the art, wherein the environmentally friendly nature of the product allows it being disposed of as organic waste.

### Manufacture of the laminates

The laminate according to the invention can be obtained by applying the coating composition onto the carrier, followed by subjecting the material to a further curing step to increase the degree of polymerization of the polyester.

The step of applying the coating onto the carrier can be carried out by methods known in the art, e.g., by spraying, brushing, roll-coating, dipping, or by other methods known in the art. It may be preferred for the polymer to be applied at elevated temperature, e.g., at a temperature of above 60°C, in particular above 80°C. In one embodiment the temperature is between 100 and 150°C. The advantage of applying the polymer at relatively high temperature is that it allows processing of a polymer with a relatively high degree of polymerization at acceptable viscosity. This ensures that the curing step of the final laminate can be relatively short. The further curing step to increase the degree of polymerization of the polyester is generally carried out until the polymer has reached a degree of polymerization of at least 70%, in particular at least 80%, more in particular at least 90%, in some embodiments at least 95%.
The further curing step is preferably carried out by subjecting the coated carrier to a temperature in the range of 20-200°C, in particular 40-150°C, more in particular 80-130°C.
The duration of the curing step will depend on the polymerization temperature and desired degree of polymerization, and may vary between wide ranges. In one embodiment, the polymerization time is between 5 minutes and 5 days. In the presence of catalyst at elevated temperatures the polymerization time could, e.g., be in the range of 5 minutes to 12 hours, more in particular 0.5 hours to 6 hours. The polymerization time may also be at least 1 hour, or at least 2 hours, or at least 4 hours. In one embodiment, the polymerization time in the range of 2 hours to 5 days, in particular 2 hours to 24 hours , more in particular in the range of 4 to 18 hours, still more in particular in the range of 8-20 hours.

Where a further carrier is present over at least part of the coating layer, it may be preferred to apply pressure to the thus-formed stack. In this embodiment, a pressure is applied which generally is in the range of 1-100 bar, in particular 2-50 bar, more in particular 2-20 bar.

In one embodiment the temperature of the reaction mixture is not elevated above 130°C before a conversion of at least 90% has been obtained. It is preferred that the temperature of the reaction mixture is not elevated above 130°C before a conversion of at least 95% has been obtained, more in particular a conversion of at leat 98%. This is to prevent decomposition of the acid which may cause discoloration of the product and may affect the properties of the polymer. It is believed that when the reaction is complete or substantially complete, the polymer will tolerate higher temperatures, because at that point in time the acid has already been polymerized, reducing the risk of decarboxylation. For example, it has been found that when the desired degree of conversion is reached, the polymer can be heated further to a temperature of, e.g., 150°C without further problems. This means that it can be used in many industrial and technological applications. In one embodiment it is preferred for the temperature of the polymer to be not elevated above 125°C before a conversion of at least 90% has been obtained. A maximum temperature of 120°C may be more preferred. It is also preferred that temperatures above these values are not reached before a conversion of at least 95% has been obtained, more in particular a conversion of at least 98%.

In one embodiment the curing step may be carried out for at least part of the time above the boiling point of water, that is, above the point where the vapor pressure of the liquid equals the environmental pressure surrounding the liquid. When the reaction is carried out at atmospheric pressure it is therefore preferred for the reaction to be carried out at a temperature above 100°C, more in particular at 105°C or higher. In one embodiment the polymer is kept at a temperature of between 100°C and 130°C for at least part of the period from the start of the reaction until a conversion of at least 90% is obtained.
When the reaction is carried at reduced pressure within this embodiment, the reaction may be carried out at lower temperatures, e.g., a temperature of between 80°C and 100°C at a pressure of 0.10 mbar.

Combinations of various temperature and pressure regimens may be envisaged.

As the polymer used in the present invention shows strong adherence to glass and metal, it may be preferred to perform the coating and curing step in surroundings provided with a non-stick coating. This can be, for example, a Teflon coating, or a silicone rubber coating. Suitable coating materials are known in the art.

It may be preferred for the manufacture of the coating composition and/or the laminate to take place in an inert atmosphere, e.g., under nitrogen or argon, to prevent reaction of the polymer or the monomers with the oxygen from the air, which may result in yellowing of the polymer.

The polymer used in the present invention will slowly hydrolyze when brought into contact with water. The hydrolyzation speed will depend in the degree of polymerization. Accordingly, if a certain degree of degradability is desired, e.g., in packaging applications, a lower degree of polymerization may be selected, e.g., between 70 and 90%. However, in cases where a more stable material is desired, with a longer degradation time, a higher degree of polymerization may be more attractive. In this case, a degree of polymerization of more than 90%, e.g., of at least 93%, at least 96%, or at least 98% may be aimed for.
In general, the materials with a lower degree of conversion will be more flexible than materials with a higher degree of conversion.

The carriers used in the present application may have any shape. Examples include plates, but the invention also pertains to carriers with a three-dimensional (= non-flat) shape. Where two or more carriers are used, they may have the same shape, e.g., in the case of triplex-type materials, but the shapes may also be different.

The laminates according to the invention have may uses. In one embodiment, they may for example be used in the invention as described the patent application in with the same inventors and the same filing date as the present application with the title of "Kit of parts comprising part susceptible to degradation by thermal loads and part comprising specific polymer". The disclosure of that application, including its various embodiments is herewith incorporated herein by reference, in particular as regards the various kits and assemblies in which the material may be used, and the uses to which it may be put.

The present invention is illustrate by the following examples, without being limited thereto or thereby.

### Example 1: Coated carrier with itaconic acid based polymer

Itaconic Acid (9 grams) and Reagent Grade Glycerol (4.5 grams) were heated with stirring at 160°C in an open beaker for 10 minutes. P-toluene sulphonic acid (500 mg) was added, which cause rapid polymerization as could be seen from evolution of bubbles in the liquid, increase in viscosity and evaporation of water.
The viscous resin was cooled to 100°C and distributed over a 17*15 cm slab of plywood. The sample was cured for 6 hrs at 110°C. A brown-colored coating adhered to the plywood, with a thickness of ca. 1-2 mm. The brown coating did not peel off when immersed in water for 5 days.

### Example 2: Coated carrier with succinic acid based Polymer

Succinic acid (10 grams) and Reagent Grade Glycerol (7 grams) were heated with stirring in an open beaker at 160°C for 15 minutes. P-toluene sulphonic acid (500 mg) were added and the viscous liquid was poured on a plywood slab (17*15 cm). The sample was cured for 12 hrs at 140°C in an oven. A brown coating of ca. 2 mm thickness was produced on the wood.
The coating is intact after immersion in water for 4 days.

### Exampe 3: Coated carrier with citric acid based polymer

Citric Acid (10 grams) and Reagent Grade Glycerol (5 grams) were heated at 100°C for 5 minutes, after which 500 mg p-toluenesulphonic acid were added. The liquid was poured on plywood occupying a surface of 200 cm2 resulting in a film with ca. 100 mg per cm2. The sample was cured at 115°C for 15 hrs. The brown coating peeled off when the substrate was immersed in water for 2 days.

### Example 4: Adhesion of wood carriers using itaconic acid based polymer

Itaconic Acid (9 grams) and Reagent Grade Glycerol (4.5 grams) were heated at 160°C for 5 minutes with stirring. 500 mg of p-toluenesulphonic acid were added and the viscous resin was applied to 120 cm2 plywood slab. A second slab of the same size was put on top of the coating and the entire sample was cured under the weight of a 1 kg stone for 12 hrs at 120°C in a thermostated oven.
The woodslabs were tightly glued together.

### Exemple 5: Adhesion of wood carriers using citric acid based polymer

A stock supply of the citric acid and glycerol polymer was prepared as follows:100 grams of Citric Acid Monohydrate and 50 grams of Reagent Grade Glycerol were heated at 120°C for 5 minutes. 500 mg of p-tolune-sulphonic acid were added and the viscous liquid was allowed to cool in a plastic container. It can be kept and transported at room temperature with a shelf life of at least several months.
Three slabs of 12 mm thick wood (10*10 cm) with a weight of 21.9 grams were wetted with in total 11 grams of the above resin and stacked. The sample was cured in an oven under the weight of a 1 kg stone. After 3 hrs the weight of the sample 29.6 indicating loss of ca. 3 grams of water, correlating to more than 95% of polymerization.
The wood slabs were firmly glued together.

### Example 6: Adhesion of wood carriers using citric acid based polymer

Citric Acid Monohydrate (40 grams) and Reagent Grade Glycerol (80 grams) were heated at 140°C with stirring in an open beaker. 2 ml of concentrated hydrochloric acid were added and the heating was continued for 2 hrs. Vigorous evolution of water was observed in the foaming viscous semi-liquid.
Ca. 10*10 cm2 woodslabs of 1.2 mm thickness, in total 29 grams, were wetted with, in total for all layers 8 grams of the resin and stacked with a wood slab on top. The stack was cured at 140°C for 2 hrs under a pressure of 10 bars (10 kN force) in a hydraulic heat press (Rondol). Polymerization was complete at over 90%, as indicated by the loss of weight of 2.5 grams of water. The slabs were firmly glued together.

## Claims

1. Laminate comprising a carrier and a coating layer, wherein the coating layer is applied over at least part of the carrier, the coating layer comprising a polyester derived from an aliphatic polyalcohol with 2-15 carbon atoms and a polyacid, the coating layer having a thickness in the range of 10-4000 microns.

2. Laminate according to claim 1 comprising a second carrier applied over at least part of the coating layer.

3. Laminate according to claim 2 comprising a further coating layer applied over at least part of the second carrier, with optional further carrier-coating stacks applied over the further carrier.

4. Laminate comprising a stack of carriers with coating layers sandwiched between the carriers, and/or applied on one or more outer surfaces of the laminate, at least one of the coating layers comprising a polyester derived from an aliphatic polyalcohol with 2-15 carbon atoms and polyacid and having a thickness in the range of 10-4000 microns.

5. Laminate according to any one of the preceding claims wherein the polyalcohol is selected from one or more of glycerol, sorbitol, xylitol, mannitol, 1,2-propane diol, 1,3-propane diol, and 1,2-ethane diol, in particular glycerol.

6. Laminate according to any one of the preceding claims, wherein the polyester is a polyester of an aliphatic polyalcohol with 2-15 carbon atoms with an acid selected from aliphatic diacids and triacids with 3-15 carbon atoms.

7. Laminate according to claim 6 wherein the acid contains at least 10 wt.% of tricarboxylic acid, calculated on the total amount of acid, preferably at least 30 wt.%, more preferably at least 50 wt.%, still more preferably at least 70 wt.%, more in particular at least 90 wt.%, or even at least 95 wt.%.

8. Laminate according to claim 7 wherein the acid contains at least 50 mol% of citric acid, preferably at least 70 mole%, more in particular at least 90 mole%, or even at least 95 mole%.

9. Laminate according to claim 6, wherein the acid contains at least 10 wt.% of dicarboxylic acid, calculated on the total amount of acid, preferably at least 30 wt.%, more preferably at least 50 wt.%, still more preferably at least 70 wt.%, more in particular at least 90 wt.%, or even at least 95 wt.%.

10. Laminate according to claim 9, wherein the acid contains at least 50 mol% of succinic acid, preferably at least 70 mole%, more in particular at least 90 mole%, or even at least 95 mole%.

11. Laminate according to claim 9, wherein the acid contains at least 50 mol% of itaconic acid, preferably at least 70 mole%, more in particular at least 90 mole%, or even at least 95 mole%.

12. Laminate according to any one of the preceding claims, wherein the carrier is a wood-based material.

13. Laminate according to claim 12, which comprises 2-20 wood-based carrier layers, for example 2-5 wood-based carrier layers, with a thickness of, e.g., 0.2-5 mm, in particular 0.5-3 mm.

14. Laminate according to claim 13, wherein a further coating layer is applied on one or more outer surfaces of the laminate.

15. Method for manufacturing a laminate according to any one of the preceding claims wherein a carrier is provided with a layer of a coating composition comprising a polyester derived from alcohol and polyacid, and the coated carrier is kept at a temperature of 20 to 200°C for a period of 5 minutes to 5 days.
